# EUROPEAN PATENT APPLICATION

(11) **EP 4 687 328 A1**
(43) Date of publication of application: **04.02.2026**
(21) Application number: 24192644.3
(22) Date of filing: 02.08.2024
(51) Int. Cl.: H04L 41/08, H04L 41/149, H04L 41/5019, G06Q 10/20, H04W 24/04, H04L 41/046, H04L 41/147, H04L 41/16, H04L 41/5041, H04L 41/0233

(54) **METHOD AND DEVICE FOR PERFORMING MAINTENANCE OF A COMMUNICATION NETWORK**

(71) Applicant: NTT DOCOMO, INC., Tokyo 100-6150 (JP)
(72) Inventor: ÜSTOK, Refik Fatih, 80687 Munich (DE); KATSALIS, Konstantinos, 80687 Munich (DE); TRIAY MARQUES, Joan, 80687 Munich (DE); HATANAKA, Yoshitaka, Tokyo, 100-6150 (JP)
(74) Representative: Viering, Jentschura & Partner mbB Patent- und Rechtsanwälte

(57) **Abstract**

According to various embodiment, a method for performing maintenance of a communication network is described comprising receiving a specification of one or more maintenance goals for one or more network entities of the communication network, determining a set of maintenance actions to achieve the one or more maintenance goals, determining at least one impact of the set of maintenance actions on one or more further network entities if they are applied to the one or more network entities, determining one or more further maintenance actions which prevent negative impact of the set of maintenance actions on the one or more further network entities, determining a maintenance action schedule for at least a subset of the maintenance actions and the determined one or more further maintenance actions and carrying out the maintenance actions of the subset of the maintenance actions and the determined one or more further maintenance actions according to the maintenance action schedule.

## Description

The present disclosure relates to methods and devices for performing maintenance of a communication network. A communication network is a complex system comprising a high number of hardware and software components encompassing a wide range of technologies and performing complex tasks. Communication networks are constantly evolving with new technologies, protocols, and applications necessitating continuous updates and upgrades to support new standards, improve performance, and address security threats. To ensure that the computer systems, networks, and software applications within a communication network remain functional, secure, and efficient, proper maintenance actions are essential. However, performing maintenance actions for a communication network is not a trivial task as the different components are usually highly interconnected and dependent on each other's operations. Performing maintenance actions on individual network entities without considering these interdependencies may cause network disruption and instability.

Accordingly, methods for effectively handling maintenance tasks for maintenance in a communication network while avoiding disruptions caused by maintenance actions are highly desirable.

Intent-driven management (IDM) is an advanced approach to managing and automating system and network operations based on high-level goals described in a declarative manner called intents. Instead of manually configuring individual devices and components, operators define their desired goals and service levels, and the system processes these intents and automatically understands a specific set of actions that need to be executed to fulfil the intents. Intents goals can be also described on per network slice basis. As an example, the document 3GPP TS 28.312, referred to as reference [1] in the following, describes Intent driven management services for mobile networks according to 3GPP (Third Generation Partnership Project).

According to various embodiment, a method for performing maintenance of a communication network is provided comprising receiving a specification of one or more maintenance goals for one or more network entities of the communication network (e.g. related to one or more network slices), determining a set of maintenance actions to achieve the one or more maintenance goal, determining at least one impact of the set of maintenance actions on one or more further network entities if they are applied to the one or more network entities, determining one or more further maintenance actions which prevent negative impact of the set of maintenance actions on the one or more further network entities, determining a maintenance action schedule for at least a subset of the maintenance actions and the determined one or more further maintenance actions and carrying out the maintenance actions of the subset of the maintenance actions and the determined one or more further maintenance actions according to the maintenance action schedule.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system 100, for example configured according to 5G (Fifth Generation) as specified by 3GPP (Third Generation Partnership Project).
- Figure 2: illustrates an intent-based maintenance management framework according to an embodiment.
- Figure 3: illustrates an Intent Handler architecture, integrating a Maintenance Agent.
- Figure 4: illustrates an operation of a maintenance reasoning agent according to an embodiment.
- Figure 5: shows a flow diagram illustrating the handling of a maintenance intent according to an embodiment.
- Figure 6: shows a flow diagram illustrating a processing of a maintenance intent according to an embodiment.
- Figure 7: illustrates options for arranging an Intent Handler and a Maintenance agent in a communication system according to 3GPP.
- Figure 8: illustrates an option for arranging an Intent Handler and a Maintenance agent in an Open Radio Access Network (O-RAN) architecture.
- Figure 9: illustrates a second option for arranging an Intent Handler and a Maintenance agent in an O-RAN architecture.
- Figure 10: illustrates how an Intent Handler including a Maintenance agent may be arranged in an ETSI (European Telecommunications Standards Institute) NFV (Network Function Virtualization) architecture.
- Figure 11: shows a flow diagram illustrating a method for handling a maintenance intent according to an embodiment.
- Figure 12: shows a flow diagram illustrating a (computer-implemented) method for performing maintenance of a communication network according to an embodiment.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for performing maintenance of a communication network, comprising receiving a specification of one or more maintenance goals for one or more network entities of the communication network, determining a set of maintenance actions to achieve the one or more maintenance goals, determining at least one impact of the set of maintenance actions on one or more further network entities if they are applied to the one or more network entities, determining one or more further maintenance actions which prevent negative impact of the set of maintenance actions on the one or more further network entities, determining a maintenance action schedule for at least a subset of the maintenance actions and the determined one or more further maintenance actions; and carrying out the maintenance actions of the subset of the maintenance actions and the determined one or more further maintenance actions according to the maintenance action schedule.
Example 2 is the method of example 1, comprising determining the maintenance action schedule of the maintenance actions of the subset of the maintenance actions and the determined one or more further maintenance actions in a manner that, according to the maintenance action schedule, a further maintenance action determined to prevent a negative impact of a maintenance action of the subset of maintenance actions is carried out before the maintenance action of the subset of maintenance actions.
Example 3 is the method of example 1 and 2, wherein the subset of candidate maintenance actions comprises one or more candidate maintenance actions of the set of candidate maintenance actions which do not have a negative impact on one or more further network entities or whose negative impact on the one or more further network entities is prevented by the one or more further maintenance actions.
Example 4 is the method of any one of examples 1 to 3, comprising determining the at least one impact based on dependencies between the one or more network entities and the one or more further network entities.
Example 5 is the method of any one of examples 1 to 4, comprising monitoring the behaviour of the one or more network entities (i.e. specifically the interaction (i.e. communication) with other network entities) and determining the at least one impact on the one or more other network entities from observations gained by monitoring the behaviour of the one or more network entities.
Example 6 is the method of any one of examples 1 to 5, wherein the specification of the one or more maintenance goals includes requirements and/or constraints.
Example 7 is the method of any one of examples 1 to 6, wherein the maintenance actions of the set of maintenance actions and/or the one or more further maintenance actions are or include an update of software of a respective network entity, an update of firmware of a respective network entity setting a configuration of a respective network entity, setting a policy for a respective network entity, checking hardware of a respective network entity and/or replacing or switching hardware of a respective network entity.
Example 8 is the method of any one of examples 1 to 7, wherein the specification of the one or more maintenance goals specifies the one or more maintenance goals by referring to a maintenance template of a predefined set of maintenance templates.
Example 9 is the method of any one of examples 1 to 8, comprising determining the at least one impact of the set of maintenance actions on one or more further network entities by predicting the at least one impact by means of a machine learning model.
Example 10 is the method of any one of examples 1 to 8, wherein the specification specifies whether the one or more maintenance goals may or whether the one or more maintenance goals should be achieved using machine learning methods and wherein the method comprises determining the set of maintenance actions, the at least one impact, the one or more further maintenance actions and/or the maintenance action schedule by means of one or more machine learning methods only if the specification specifies that the one or more maintenance goals may be achieved using machine learning methods.
Example 11 is the method of example 9, wherein the method comprises determining the set of maintenance actions, the at least one impact, the one or more further maintenance actions and/or the maintenance action schedule by means of one or more machine learning methods in reaction to the specification specifying that the one or more maintenance goals should be achieved using machine learning methods.
Example 12 is the method of any one of examples 1 to 11, further comprising verifying whether the one or more maintenance goals (e.g. KPI expectations) have been fulfilled and reporting to a sender of the specification of the one or more maintenance goals about whether the one or more maintenance goals has been fulfilled.
Example 13 is a communication network maintenance component, configured to perform the method of any one of examples 1 to 12.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

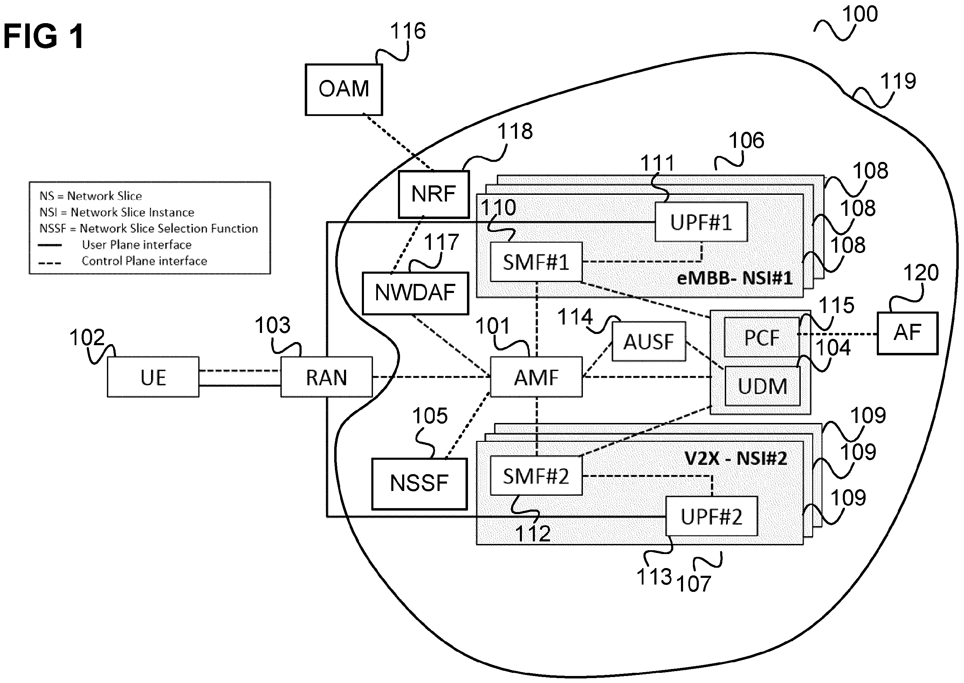

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113.

The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice. In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function). The core network 119 may further include a Network Data Analytics Function (NWDAF) 117. The NWDAF is responsible for providing network analytics and/or prediction information upon request from network functions.

For a communication system like the one illustrated in Figure 1, operations related to hardware and software maintenance need to be carried out periodically or on demand.

Network and system maintenance refers to regular tasks, processes, and methodologies employed to keep a network or a system up and running smoothly. Common tasks involved in a network and system maintenance include:
- Troubleshooting network issues
- Installing or upgrading network and system equipment and software
- Regularly monitoring the network and systems for irregularities
- Enforcing network and system security measures
- Optimizing network and system performance
- Regularly backing up configuration and operational data
- Creating and updating usage policies and procedures
- Ensuring network redundancy to prevent total shutdown in case an effective component fails

Examples of maintenance actions (on a network entity targeted by the maintenance action, i.e. targeted to (or directed to) and eventually applied to a network entity) are:
- Updating firmware and software of a network entity
- Checking and replacing hardware of a network entity
- Conducting security audits of a network entity
- Optimizing performance of a network entity

Network maintenance is challenging due to interdependencies between different components which makes it prone to human error. Investigating all possible interdependencies between hardware and software components is highly complex. If a system is regularly upgraded/updated with new software and hardware components these interdependencies can vary over time. Any update in a network element, network function or a network node may impact other elements, functions or nodes inadvertently. In the light of network slicing a component can be also shared between multiple network slice instances. The operator who carries out the maintenance may not be aware of the impact and may cause a traffic disruption. In general, any maintenance fault can cause traffic disruption and network elements, functions, nodes or clusters which are subject to maintenance may be unavailable until the maintenance is completed which will result in traffic disruption during maintenance times. Therefore, maintenance is typically conducted during less busy times such as night times to minimize any negative effect on network operation in case of faults.

Additionally, the validation of a maintenance task can take a long time because it involves a series of checks such as evaluation of a set of Key Performance Indicators (KPIs). Sometimes a maintenance can take weeks or even longer for the complete network because post-maintenance operations need to be monitored. The monitoring of the post-maintenance operations is also important to complete maintenance work as it can detect whether the KPIs are met after the maintenance.

According to various embodiments, an intent-based maintenance management mechanism is provided. Specifically, methods, mechanisms and interfaces are provided to enable intent-based maintenance of a communication network (and thus telecommunication services and resources).

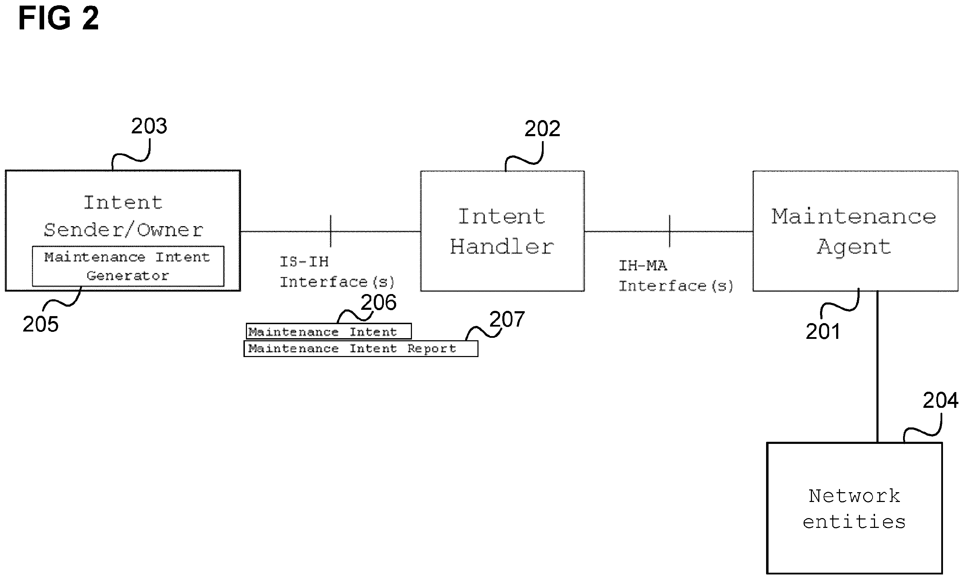

Figure 2 illustrates an intent-based Intent Handler 202 with maintenance management capabilities according to an embodiment.

According to various embodiments, a Maintenance agent 201 is introduced to support intent-based maintenance management.

The Maintenance agent 201 implements a method and (by being implemented on a processing device, i.e. typically in software on a computer system) an apparatus for maintenance of network entities 204 such as a network element, a network function, a network node or a cluster etc. of a communication network 100 as described with reference to figure 1. The network entities 204 may be understood to include all network entities, like also hardware and software system entities for which a maintenance should possibly be performed. This may include cloud infrastructure, network elements, network functions, network nodes, network clusters etc.

The functionality of the Maintenance agent 201 in that regard includes in particular a function to determine interdependencies of network entities with respect to maintenance, a function to select maintenance actions, a function to execute maintenance actions and a function to validate the maintenance through KPIs and provide information about maintenance results in an intent report.

According to an embodiment, intent-based maintenance management is based on an extension of the 3GPP SA5 (Third Generation Partnership Project Service and System Aspects) intent management model. According to 3GPP SA5, in the context of intent-based network management, an intent is a specification of requirements, including goals and constraints, given to a system, without specifying how to achieve them.

According to various embodiments, an intent handling function (e.g. corresponding to Intent Handler 202)
- receives an intent description
- decides which actions must be taken to optimally fulfil all given intents
- implements its decisions
- sends an intent report.

The intent handling function has for example a knowledge base that contains an intent ontology. The intent ontology implies a general underlying vocabulary that is specific to the intent. The intent ontology according to the TM Forum (TMF) is based on the resource description format (RDF).

An intent creator (or intent sender or owner) 203 creates an intent description which includes a maintenance intent 206 which it sends in form of a maintenance intent description (e.g. as part of an intent description) to the Intent Handler 202. The Intent Handler 202 delegates the handling of the Maintenance Intent description to the Maintenance Agent 201 through IH-MA (Intent Handling - Maintenance) interface(s). After processing the intent, the Maintenance Agent 201 sends the results through the IH-MA interface(s). It should be noted that the Maintenance Agent 201 can also be part of the Intent Handler 202. In that case, the IH-MA Interface(s) between the Intent Handler 202 and the Maintenance Agent 201 corresponds to an internal interface or internal operations.

The maintenance intent description can be provided manually (for example by the operator) or it can be generated automatically by a Maintenance Intent Generator function residing in (or interacting with) the Intent creator (or intent sender or owner) 203. The Maintenance Intent Generator function decides the maintenance Intent through interaction with fault detectors and/or alarm generators and other sources, for example but not limited to, previous maintenance intents that were submitted, maintenance plans etc.

For intent-based maintenance management based on 3GPP SA5 intent management model, according to various embodiments, attributes for an Intent IoC (Information Object Class) to support network maintenance are introduced to provide a Maintenance Intent IoC. According to various embodiments, the Maintenance Intent IoC is used for the maintenance intent description, i.e. the intent sender 203 sends an instance of the Maintenance Intent IoC as part of the maintenance intent (i.e. its specification) 206. So, in case intent-based maintenance management is based on 3GPP SA5 intent management, the maintenance intent description may correspond to a (newly introduced) Intent IoC (denoted herein as Maintenance Intent IoC), i.e. the maintenance intent description is an instance of the Maintenance Intent IoC. The usage of a maintenance intent IoC for the maintenance intent description is used in the following but embodiments are not limited to this form of maintenance intent description.

An intent IoC instance may include one or more intent expectations: in the most basic form, a service consumer may use an intent to express (as an intent expectation) to a service producer the need for: "an object O with characteristics S" where the characteristics S reflect the requirements, goals and contexts for an object. For a given intent expectation, the desired characteristics of the object(s) are the expectation targets to be achieved. For maintenance purposes an intent expectation is describing an instance of the Maintenance Intent description. The expectation targets may include the metrics that characterize the performance of the object(s) or some abstract index that expresses the behaviour of the object(s). A given intent expectation may include multiple expectation targets on the same object or on different objects with the same properties. The object(s) for which a given expectation is addressed can be expressed with the object's identifier. This may, however, not always be adequate for some intents (e.g. if the consumer does not have or know the identifiers of the object). The intent may further include (possibly per expectation, expectation target or expectation object) a context which describes applicability constraints and conditions that may apply to the intent and its information elements.

The Maintenance Agent 201 includes a function (Maintenance Scheduler) which schedules operations (which include in particular maintenance actions executed on the managed network entities (i.e. the targets of the maintenance) but also other operations like agent calls) for orchestrating for handling the maintenance intents while aiming to keep signalling between entities low and avoiding negative impact on further network entities (not directly targeted by the maintenance actions). The Maintenance Scheduler as well as the Maintenance Agent 201 itself does not necessarily need to be implemented as part of the Intent Handler 202. Rather, they are logical functions which could also reside outside the Intent Handler 202. The communication between Intent Handler 202 to the Maintenance Agent 201 is made through IH-MA Interface(s).

The Intent Handler 202 is thus an entity to support intent-based maintenance management. It parses and processes the intent. It may support handling of different intents (not only for maintenance) and forwards an intent, if it is about maintenance (i.e. a maintenance intent) to the Maintenance agent 201 for further processing.

The Maintenance agent 201 performs translation, analysis, reasoning and decision making, such as
- An analysis of the high-level requirements and constraints provided in the Maintenance Intent IoC instance, with the goal of mapping them into appropriate constructs and data models
- Analysis of the relationships between different managed entities. Different managed entities can be related to harware and/or software components, belong to different layers, serving different purposes etc).
- Usage of any relevant information obtained to assess the Maintenance Intent IoC instance fulfilment status and to make decisions on any further actions to maintain the desired requirements and/or constraints specified in the intent object, avoid impacting any other network entity i.e. network element (or component), network function, network node and/or network cluster.
- Enable discovery, registration, updating and/or removal of any use-case specific templates to enable rule-based processing in case AI-based intent handling is not selected (e.g. not desired) for the specific use-case.

Further, the Maintenance agent 201 selects appropriate maintenance actions (through interaction with other entities or alone) and executes the selected maintenance actions (through interaction with other entities or alone).

According to various embodiments, a repository and APIs (application programming interfaces) are provided for the Intent Handler 202 to query, register, update and remove any rule-based templates for maintenance or any other specific use-case.

After having handled the intent (i.e. having performed a maintenance task according to the maintenance intent) the Intent Handler sends a maintenance intent report 207 to the intent owner 203, i.e. in the form of a Maintenance Intent Report IoC.

An Intent IoC (in particular, the Maintenance Intent IoC and the Maintenance Intent Report IoC) may comprise one or more attributes which allow the intent owner 203 to select whether they want their intents to be processed by means of Intelligent Agents with artificial intelligence support (i.e. specifically using a machine learning model) or not. For example, the intent owner 203 can (e.g. by specifying corresponding options in the maintenance intent description) select between the following options:
- Option 1: Intelligent Agents based handling of intent. e.g., using Artificial Intelligence (AI).
- Option 2: non-AI-based handling of intent e.g. using rule-based agents

The intent sender 203 (i.e. the intent creator and owner) is the entity sending the maintenance intent 206 (e.g. Maintenance Intent IoC instance). It may include a Maintenance Intent Generator 205 which automatically generates the Maintenance Intent IoC instance based on one or more conditions and/or events etc. The creation of the Maintenance Intent IoC instance can also be triggered by a human network operator (e.g. by specifying an intent for with the Maintenance Intent IoC instance is then generated).

The Maintenance Intent Generator 205 for example interacts with (existing) fault detectors and/or alarm generators and receives maintenance intent reports 207, faults and/or alarms, information about fault and/or alarm causes, notifications about detected events and/or tickets or other Inputs (e.g. input from a network function virtualization orchestrator (NFVO), a RAN Intelligent Controller (RIC) or existing time plans).

For automatic maintenance intent generation (and corresponding Maintenance Intent IoC instance generation), the Maintenance Intent Generator 205 may thus leverage outputs of fault detectors and information about alarms, as well as previous intent reports etc. It uses its input to decide about the maintenance expectations and generates the maintenance 206 intent (e.g. in form of the Maintenance Intent IoC instance) based on the maintenance expectations. The Maintenance Intent Generator 205 for example respects a maintenance plan and/or maintenance policies of a calling entity or entities involved (e.g., annual maintenance). Maintenance policies can be also enforced by the Maintenance agent 201.

As mentioned above, according to various embodiments, a Maintenance Intent IoC is provided by adding attributes to the Intent IoC (according to 3GPP as described in reference [1]) to support network maintenance.

For example, the following attributes are extended, defined and added, respectively, with respect to the Intent IoC of reference [1] for the IntentExpectation Object
- The attribute "objectType" is used in maintenance mode (i.e. for the Maintenance Intent IoC) to indicate whether the maintenance is for network function, network node or a cluster. The values for objectType are for example "ranNetworkElementMaintenance", "coreNetworkElementMaintenance", "ranNetworkFunctionMaintenance", "coreNetworkFunctionMaintenance" "networkNodeMaintenance" and "networkClusterMaintenance".
- The attribute "objectInstance" in maintenance mode refers to a network function, a network node or a cluster which is the object of network maintenance. It can be the DN (distinguished name) of a ranNetworkElementMaintenance, coreNetworkElementMaintenance, ranNetworkFunctionMaintenance, coreNetworkFunctionMaintenance , networkNodeMaintenance, networkClusterMaintenance
- A new optional attribute for Object Context "maintenanceContext" refers to target version, type (i.e. software, hardware) or any information related to maintenance if any. It is for example implementation (or vendor) specific.
- New optional attributes for Object Context maintenanceStartTimeContext maintenanceEndTimeContext refer to the start / end time context of the intended network maintenance.
- New optional attribute for Object Context aISupportRequirementContext refer to the use of AI in the agents per expectation. If it is set to True, the agents are allowed to leverage AI. If it is set to False, the agents operate in a rule-based manner.
- New optional attribute for Object Context templateSupportRequirementContext refers to the use of templates per expectation. If it is set to True, the templates should be used to determine the actions to execute. However, the Intelligent Agents can still be used if the templates are not adequate to proceed, for example values for some attributes may be missing. If it is set to False, the Intelligent Agents should be leveraged. Intelligent Agents can be also used to select the appropriate template if a specific template has not been indicated.

The Maintenance Intent IoC can inherit attributes for context defined in reference [1]. For example, edgeIdentificationIdContext can identify the edge network where network functions are to be maintained

The Maintenance Intent IoC can inherit attributes from the existing intent expectations defined in reference [1] (e.g. 5GC (Fifth Generation core) network, radio network performance), e.g. to set goals or constraints for the maintenance. For example, if the maintenance is aimed at reducing the RAN (radio access network) energy consumption, it may include rANEnergyConsumptionTarget expectation target as described in reference [1].

As mentioned above, according to various embodiments, the communication between the Intent Handler 202 which is responsible for Intent onboarding and the Maintenance Agent 201 is carried out via IH-MA Interface(s). Through the IH-MA Interface(s) the following operations are supported:
- Management of maintenance intent operation
- Reporting of maintenance intent processing results operation

The management of maintenance intent operation includes transferring maintenance intent information that includes maintenance intent IoC, timestamp for onboarding, Maintenance Agent ID and the Intent Handler ID. If the Maintenance Agent ID is not provided it is up to the Intent Handler to decide which Maintenance Agent to use.

Reporting of maintenance intent processing results operation includes transferring the intent processing results which includes maintenance intent report IoC, timestamp for reporting, Maintenance Agent ID and Intent Handler ID.

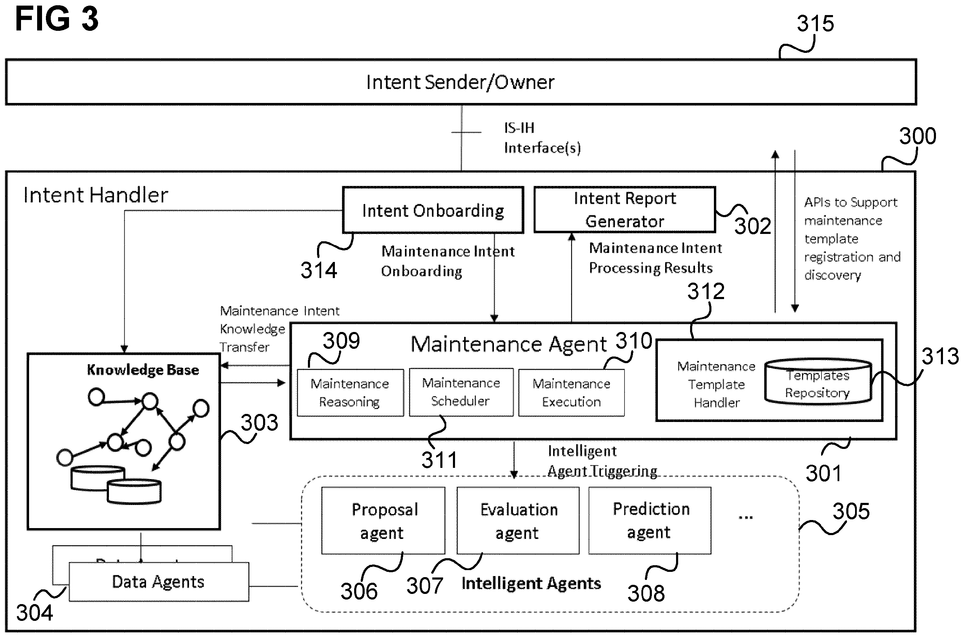

Figure 3 illustrates an Intent Handler 300 (corresponding to Intent Handler 202 of figure 2) in more detail.

The Intent Handler 300 comprises, as described with reference to figure 2, a Maintenance Agent 301 and is coupled to an Intent creator (or Intent sender or owner) 315 via one or more IS-IH Interfaces.

Further, the Intent Handler 300 comprises an Intent onboarding function 314 (for receiving the intent 206), an Intent Report Generator function 302, a knowledge base 303, one or more Data Agents 304 and one or more Intelligent Agents 305 including for example a Proposal Agent 306, an Evaluation Agent 307 and a Prediction Agent 308.

The knowledge base 303 is a pool of data (e.g. at least partially determined by inference, possibly ML (machine learning)-based) that is used by the Intent Handler 300 and its components.

Data Agents 304 are software services that collect and write data from managed entities (in particular entities which are targeted by maintenance actions) or functions of the Intent Handler to respective databases in the knowledge base 303.

Intelligent agents 305 carry out operations related to analysis and decision making, e.g.
- Proposal Agents 306 propose an action or multiple actions (for handling a maintenance intent)
- Prediction Agents 307 predict the outcome of proposed actions
- Evaluation Agents 308 evaluate the predictions and decide whether the outcomes are desired.

Intelligent Agents 305 can use AI-based techniques, e.g. machine learning models trained for the respective tasks such as proposing actions from the specification of an intent and predicting an outcome of an action.

The Maintenance agent 301 (a further software tool) includes and/or interacts with (and case that one or more of them are external to the Maintenance agent in another embodiment):
- a Maintenance Reasoning Agent 309 which is responsible for creating inference including association of maintenance events with alarms, impact on other network functions (other than the network function(s) targeted by a maintenance action) e.g. based on observations from handling of previous intents, impact on Network Slice Instances in the case of Network Slicing, expected faults and impacted KPIs. Maintenance Reasoning Agent can use AI-based techniques, e.g. machine learning models trained for the respective tasks.
- Maintenance Execution agents 310 which execute maintenance actions (which may include for example software upgrade, setting configurations aligned with policies etc.) evaluated and selected by the Intelligent agents 305. So, the Maintenance Execution agents 310 carry out (realize) proposed maintenance actions in the network. Further, they write information about the results of the maintenance actions in the knowledge base 303, e.g. an indication about whether the execution of a certain maintenance action was successful or not. In some embodiments, the maintenance execution agents 310 are associated with rule-based templates which are introduced (pre-defined). The Maintenance Execution Agents 303 can be internal to the Maintenance agent 301 but can also be an external entity within the Intent Handler 300, or an entity external to Intent Handler 300 (e.g. within SMO (Service Management and Orchestration)).
- a Maintenance Scheduler 311 which
   - orchestrates the intent handling operations needed for handling the maintenance intents (e.g., call of an Intelligent Agent)
   - schedules operations to handle the received maintenance intent 206 (i.e. received Maintenance Intent IoC instance). This includes in particular determining a maintenance action schedule for (selected) maintenance actions.
   - is responsible to find the right Maintenance execution agents 310 and call them at the right time (and the right order) to perform maintenance actions according to the maintenance action schedule, i.e. it schedules maintenance actions evaluated and selected by the Intelligent Agents 305.
- a Maintenance template handler 312 which is responsible for registration and discovery of maintenance templates that are hosted in a repository called Templates Repository 313. The templates that are hosted in Templates Repository 313 may have values for the attributes that are provided during onboarding. In some cases, these values may be missing, and the Maintenance Scheduler 311 calls the Intelligent Agents 305 to find the values that may fulfil the maintenance intent.

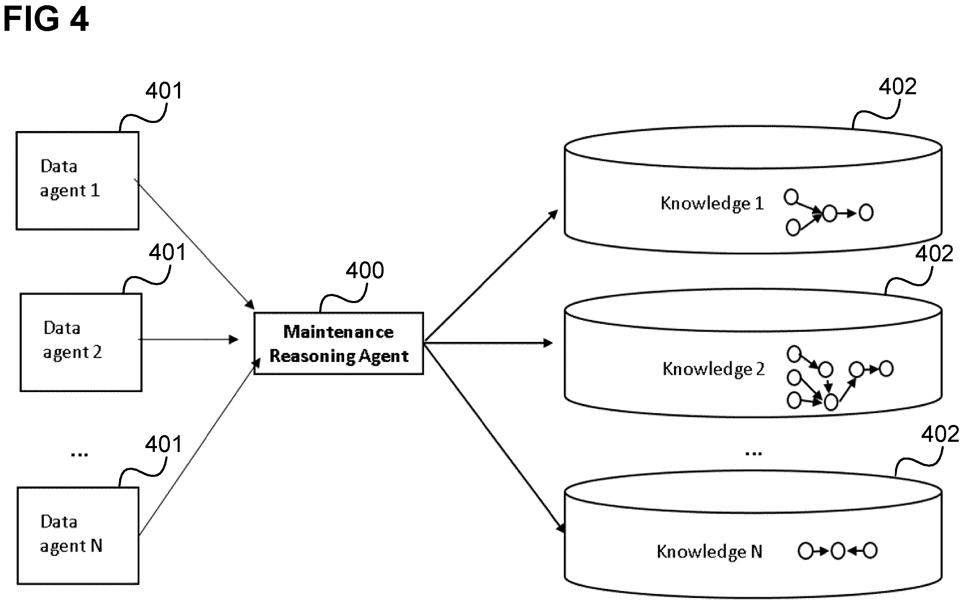

Figure 4 illustrates an operation of a Maintenance Reasoning Agent 400 (corresponding to Maintenance Reasoning Agent 309 of figure 3).

The Maintenance Reasoning Agent 400 can access databases (at least partially forming the knowledge base 303) populated by data agents 401 (corresponding to data agents 304) and create (dynamic) maintenance information (or "knowledge") 402, i.e. association of maintenance events with alarms, impact of maintenance actions on other (i.e. non-targeted) network functions, previous maintenance intent reports, expected faults and impacted KPIs. In other words, Maintenance Reasoning agent 400 processes data stored in the knowledge base and generates inferred maintenance information. The inferred maintenance information is also stored in the knowledge base.

An example flow on the Maintenance scheduler 311 which interacts with the different functions and carries out the intended functionality is the following:
- if a received maintenance intent 206 (i.e. Maintenance Intent IoC instance) is infeasible it sends a corresponding intent feasibility report back to the intent owner 203 to re-consider about the intent.
- if the received maintenance intent 206 is feasible, it checks start time and end time attributes of the maintenance intent and schedules maintenance operations according to those times.
- if start time and end time attributes of multiple maintenance intents overlap, the maintenance scheduler 311 checks priority and pre-emption capability attributes of the maintenance intents. If the priority and pre-emption capability attributes make a maintenance intent to be eligible to be processed, then the maintenance scheduler 311 uses existing data in the knowledge base 303 or triggers the data agents to create and/or update databases (within the knowledge base 303) with information required by the Maintenance Reasoning agent 400 to generate maintenance information 402 (related to the maintenance intent). When the databases have been created and/or updated, the maintenance scheduler 311 interacts with the Maintenance Reasoning agent 400 which creates the maintenance (inferred) knowledge (or information) 402.
- After the maintenance information 402 has been created, the maintenance scheduler interacts with the Intelligent agents like Proposal agents 306, Prediction agent(s) 307 and Evaluation agent(s) 308.
- If the Evaluation agent(s) 308 evaluate(s) that maintenance actions (proposed by the proposal agent(s) 306) can fulfil the maintenance intent (while avoiding impact on other network entities), the Maintenance scheduler 311 triggers the maintenance execution agents 310 to carry out the maintenance actions. The maintenance actions to be executed are decided by the Maintenance scheduler based on the analysis provided by the Evaluation agent(s).
- It also schedules sending the intent report based on an observation period attributed specified in the Maintenance Intent IoC intent or when the intent has been fulfilled (i.e. handling of the intent has been completed).

As mentioned above, the Maintenance Template handler 312 may comprise a maintenance templates repository 313. The maintenance templates repository 313 stores maintenance templates. Maintenance templates allow restricting possible maintenance actions to specific actions to handle the specifications of a maintenance task (to achieve one or more maintenance goals) according to a maintenance intent. The Maintenance template handler 312 includes APIs that enable query, discovery, registration, update and removal of templates in the maintenance templates repository 313.

It may in this case be required that an attribute indicating whether template-based methods may be used to handle the intent (e.g. an "templateSupportRequirementContext" attribute) is set to true in the intent IoC. In that case the Maintenance Agent will search for appropriate templates through the Template Handler.

The Maintenance Template handler 312 supports the usage of maintenance templates. The intent processing can be restricted using a predefined set of (augmentable) templates from which the intent sender 203 can choose. Each Maintenance template defines a schema and can include for example an identification, a scope, one or more action(s), and dependencies for parts or overall maintenance. A maintenance template can be referred to in the Maintenance Intent IoC if the templateSupportRequirementContext is True.

The Intent description passed from the Intent Handler can include Expectations that are using or not using maintenance templates. Also, the maintenance intent passed to the Intent Handler may or not include the values of the template properties. The values of the template properties can be predefined or selected based on Intelligent agents' operations. Also, in case a specific template is requested to be used but is not available in the knowledge base, Intelligent agents can be used to fetch the template from external sources.

In general, there may be no restriction to use templates. The Maintenance reasoning agent 400 can (possibly depending on the aiSupportRequirementContext value) include templates (or information therefrom) into the maintenance information through the maintenance template handler 312.

Exemplary maintenance templates are for example a device firmware update template and a node OS (operating system) update template. (It should be noted that in such a simple example, the maintenance task (here the update) corresponds to the maintenance action (update of the respective network entity) which can fulfil the (one or more) maintenance goal(s); however, one or more further maintenance actions (e.g. updates of further network entities) may be performed to avoid a negative impact (e.g. failure of interoperation of network entities)).

It should be noted that the concept of templates can be considered for accommodating all kinds of intents (i.e. not only maintenance intents but for example also energy efficiency intents by means of energy efficiency templates).

In case there is a requirement to use Maintenance templates but there is no indication of the values of the attributes to be used, then Intelligent Agents can be used to decide the appropriate values, still conforming to the template schema.

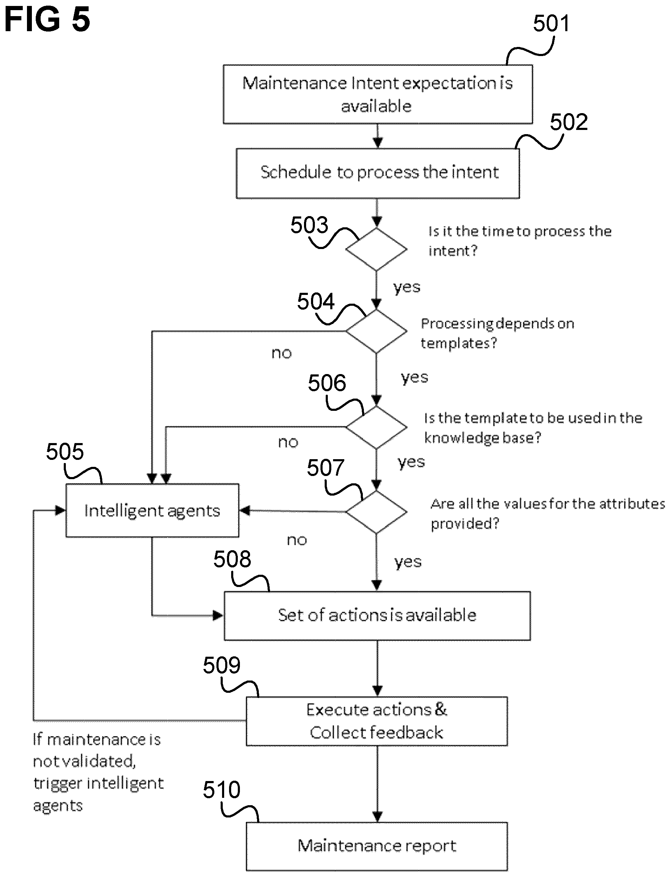

Figure 5 shows a flow diagram 500 illustrating the handling of a maintenance intent. In 501, the Maintenance agent 301 receives a maintenance intent, i.e. an intent including a maintenance intent expectation. Upon starting to process the maintenance intent in 503 (i.e. scheduling the maintenance intent handling operations), the Maintenance Agent 301 checks, in 504, whether the handling of the maintenance intent requires one or more templates (by checking the templateSupportRequirementContext attribute). If it does not require templates, then it calls the Intelligent Agents 505 (corresponding to Intelligent Agents 305) to determine a set of maintenance actions. If the Maintenance Agent 301 determines that one or more templates are required, then it discovers the required template through the Template Handler in 506. In some cases, the templates may include values for attributes, but in some cases, the values may be missing. In case the values are missing, or a needed template cannot be discovered in the knowledge base 303, the Maintenance Agent 301 in 507 calls for the Intelligent agents 505 to find values for right configurations. When, from the Intelligent Agents 505 and/or the one or more templates the set of maintenance actions is available in 508, the Maintenance Agent executes these maintenance actions in 509 and collects feedback. If the maintenance intent is not validated, the Maintenance Agent calls for Intelligent Agents 505 for new set of actions to proceed with. In 510 the Maintenance Agent 301 eventually sends the maintenance report 207.

The maintenance report 207 may be in the form of a Maintenance Intent Report IoC instance, wherein, according to various embodiments, the Maintenance Intent Report IoC inherits the attributes from the Intent Report IoC defined in reference [1], for example:
- intentFulfilmentReport can include the status of the fulfilment state of a maintenance intent or related reasons for a nonfulfilled status.
- expectationFulfilmentResults can include status of the fulfilment state of maintenance intent expectation or related reasons for nonfulfilled status.
- targetFulfilmentResults can include a status of the fulfilment state of a maintenance related expectationTarget or related reasons for nonfulfilled status.
- target Achieved Value can include the value achieved for the expectation target of a maintenance intent at the time at which the report is generated.

The specific allowed values for these attributes are for example implementation (e.g. vendor) specific. In addition, the intent report can include maintenance specific attributes such as:
- maintenanceActionsTaken: it may include information what actions are taken for maintenance, such as software roll-out.
- maintenanceValidationTimestamp: it may include the time information when maintenance is validated (for example all intent expectations are fulfilled)
- maintenanceActionsImpact: it may include information whether maintenance action had any impact on any network element and/or network function and/or network node and/or network cluster.
- maintenanceActionsImpactResolution: it may include whether the impact has been resolved by taking specific action(s).

In case templates have been utilized a part of the report IoC may include information about analysing how templates have been used.

In figure 3, the Intelligent agents 305 and the Maintenance Execution agents 310 are shown to be internal to the Intent Handler 300. However, they may also be external to the Intent Handler 300 (and coupled to the Intent Handler 300). The Maintenance reasoning agent 309 may also be external to the Intent Handler (e.g. as part of the Intelligent agents 305).

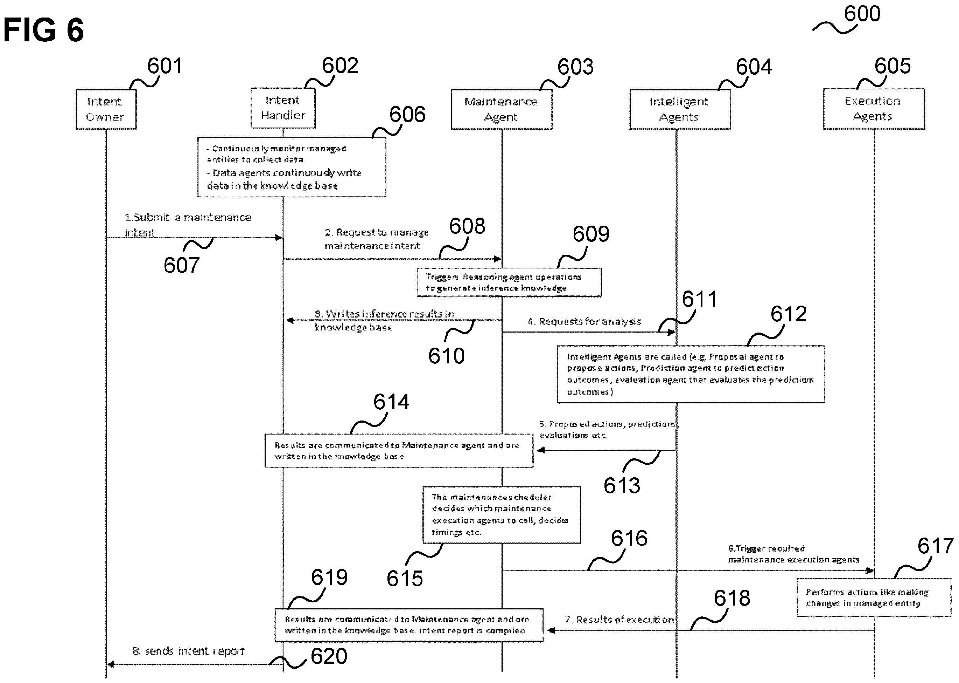

Figure 6 shows a flow diagram 600 illustrating the processing of a maintenance intent.

An Intent Owner 601, an Intent Handler 602, a Maintenance Agent 603, Intelligent Agents 604 and Maintenance execution agents 605 are involved in the flow.

In 606, the Intent Handler 602 continuously monitors the knowledge base 303. The data agents 304 continuously monitor network entities to collect data about them (e.g. their behaviour but possibly also their current configuration etc.) and add information gained from the monitoring to the knowledge 303 (e.g. write it to a data base).

In 607, the Intent Owner 601 submits a maintenance intent to the Intent Handler 602. The Intent Handler 602 may retrieve available information related to the maintenance intent from the knowledge base 303.

In 608, the Intent Handler 602 requests the Maintenance Agent 603 to manage handling of the maintenance intent 608. The Maintenance Agent 603 (specifically the maintenance scheduler 311) may then prepare a maintenance schedule, i.e. a schedule of operations to handle the intent It should be noted that the scheduling of the actual maintenance actions on the managed network entities is done after the maintenance actions have been selected.

In 609, the Maintenance Agent triggers the Maintenance Agent 603 functions (in particular the Maintenance reasoning agent 309) to generate inference knowledge leveraging, for example but not limited to, data provided data agents such as monitored KPIs, faults and alarms; maintenance templates in Templates Repository 313, previous intent reports. This knowledge may include the dependencies of all possible maintenance actions (for example provided in a maintenance template in Templates Repository 313), their impacts, if any, in one or more network elements and/or network functions and/or network node and/or network cluster.

In 610, the Maintenance Agent 603 writes inference results from the maintenance reasoning agent 309 into the knowledge base.

In 611, the Maintenance Agent 603 sends a request for analysis to the Intelligent Agents 604.

In 612, the Intelligent Agents 604, in reaction to the request, carry out the following
- the Proposal agent retrieves maintenance information from the Knowledge base 303 and proposes, based on the retrieved maintenance information, one or more maintenance actions (or "maintenance execution actions", which may include a configuration of one or more network entities or setting a policy for one or more network entities
- the Prediction agent retrieves knowledge (in particular the proposed maintenance actions) from the knowledge base 303 to predict outcomes of the proposed maintenance actions .
- the Evaluation agent retrieves information from the knowledge base evaluates the predictions (i.e. the predicted outcomes) .

The Intelligent Agents 604 report the proposed maintenance actions, the predicted outcomes and the information about the evaluation to the Maintenance Agent 603 which writes it to the knowledge base 303 in 614.

In 615, the Maintenance Agent 603, specifically the maintenance scheduler 311, retrieves the information about the evaluation from the knowledge base 303, decides about the maintenance actions to be performed and about the order in which they are to be performed and, in 616, calls the Maintenance execution agents 605, to perform the maintenance actions on the respective network entities (i.e. make changes in the network entities).

It should be noted that the maintenance actions may include maintenance actions on the managed entity or entities but may also include maintenance actions which the Maintenance agent 603 deems to be necessary (e.g. based on the information about the evaluation of the proposed maintenance actions) to be performed due to dependencies between the network entities of the communication network (which it retrieves from the knowledge base 303 and which has for example been added thereto by the maintenance reasoning agent (as part of the maintenance information) to avoid negative impact of (individual) maintenance actions).

For example, the maintenance reasoning agent 309 may determine that the operation of an SMF depends on the operation of an AMF and that therefore, an update of an SMF requires an update of the AMF to be carried out before to avoid malfunction of the SMF. The maintenance scheduler 311 may thus schedule an AMF update before the SMF update and trigger the Maintenance execution agents 610 accordingly to perform the updates in that order.

By taking into account dependencies between network entities, the maintenance reasoning agent 309 can ensure that the maintenance of one or more network entities (i.e. the managed entities) does not negatively impact any other network element, network function, network node an/or network cluster. It can thus avoid an inadvertent network disruption caused by maintenance.

In 618,the managed network entities may add information about the outcome of the maintenance actions to the knowledge base 303 .

In 619, the maintenance agent 603 determines whether the maintenance intent has been fulfilled by accessing the knowledge base 303, e.g. by monitoring knowledge base 303 for a certain observation period and, when the observation period ends, generates a maintenance intent report and adds it to the knowledge base and sends it to the Intent owner 601 in 620.

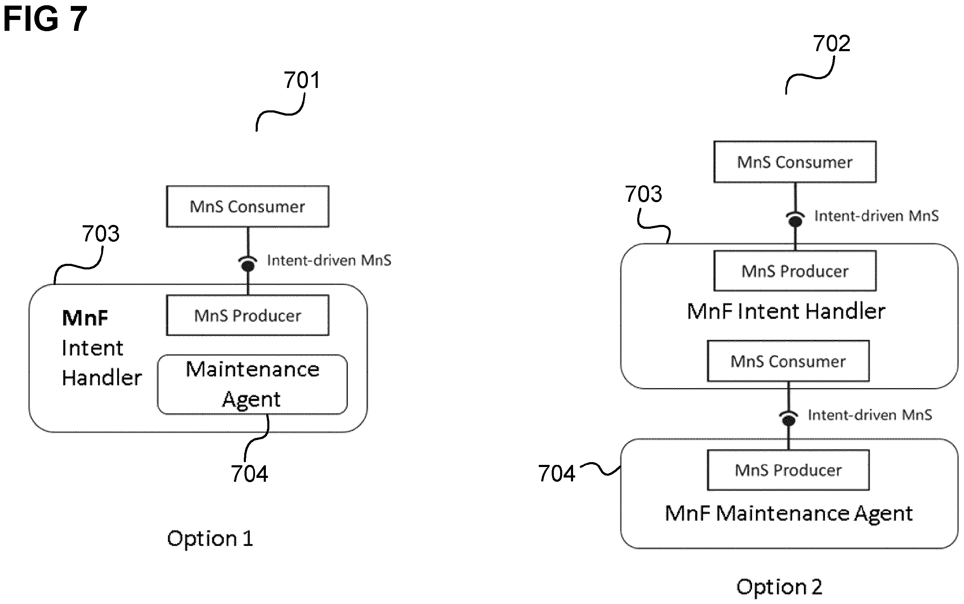

Figure 7 illustrates a first option 701 and a second option 702 for arranging the Intent Handler 703 and the Maintenance Agent 704 in a communication system according to 3GPP Service-Based Management Architecture in context of Intent Driven Management Service (MnS), see reference [1]. It should be noted that 3GPP is only an example and the approaches described herein can be analogously applied to other standards.

The Intent Handler 703 acts in both options 701, 702 as MnS producer. The options 701, 702 differ in that in the first option 701, the Maintenance Agent 704 is part of the Intent Handler 703 while in the second option 702, the Maintenance Agent 704 resides outside the Intent Handler and acts as a separate MnS producer (whose service is consumed by the Intent Handler 703).

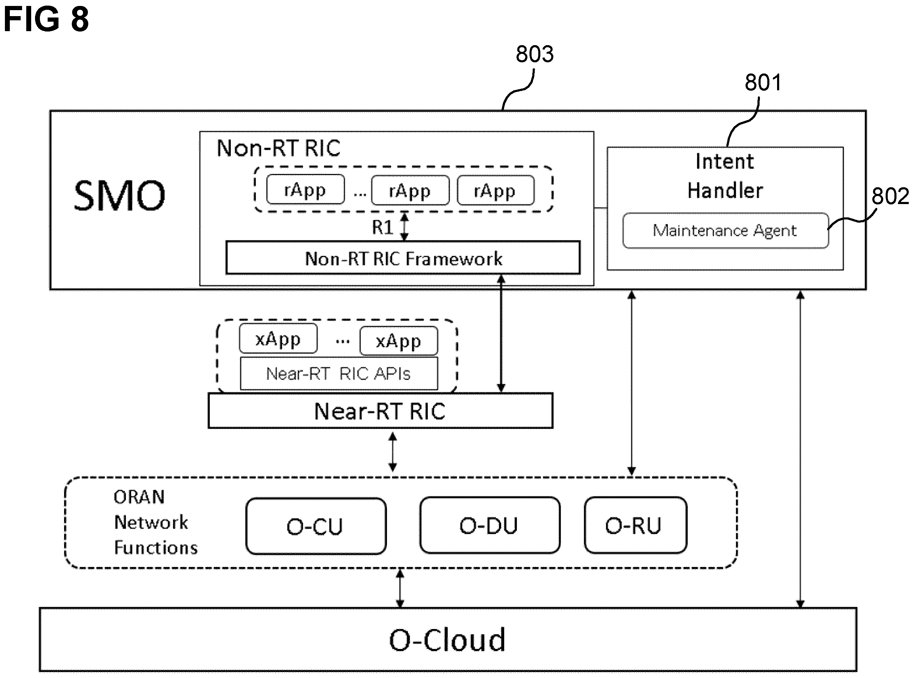

Figure 8 illustrates a first option how an Intent Handler 801 and a Maintenance agent 802 may be arranged in an O-RAN (Open RAN) architecture. In this option, the Intent Handler 801 including the Maintenance agent 802 is part of the SMO (service management and orchestration) 803.

Example IMS (Infrastructure Management Services) Data to collect in the knowledge base
- Hardware and Software inventory information
- Software update acceptable (available versions) - Prechecks
- IMS Update conditions
- IMS testing procedures
- O2ims previous provision responses
- O-Cloud healing history
- Alarm History
- PM Jobs history and reports

Example DMS (Deployment Management Services) Data to collect in the knowledge base
- Available resources
- Allocated resources per NF
- DMS Testing procedures
- O2dms previous provision responses
- DMS software images
- NF Healing history

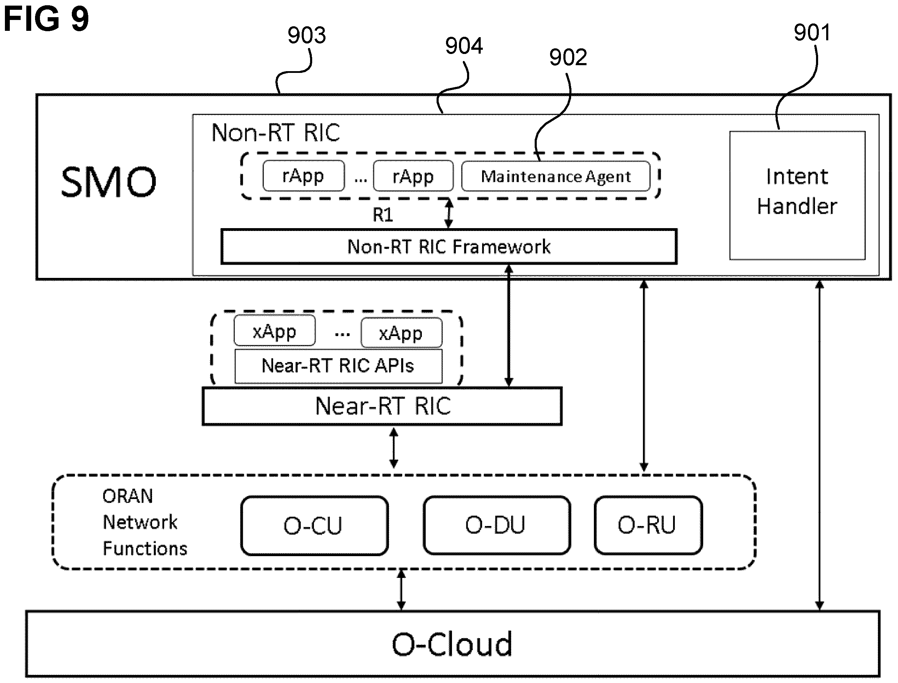

Figure 9 illustrates a second option how an Intent Handler 901 and a Maintenance agent 902 may be arranged in an O-RAN (Open RAN) architecture. In this option, the Intent Handler 901 and the Maintenance agent 902 are both part of the Non-RT (real-time) RIC (RAN intelligent controller) framework 904 of the SMO (service management and orchestration) 903, wherein the Maintenance agent 902 is implemented as an rAPP (i.e. a non-real-time application).

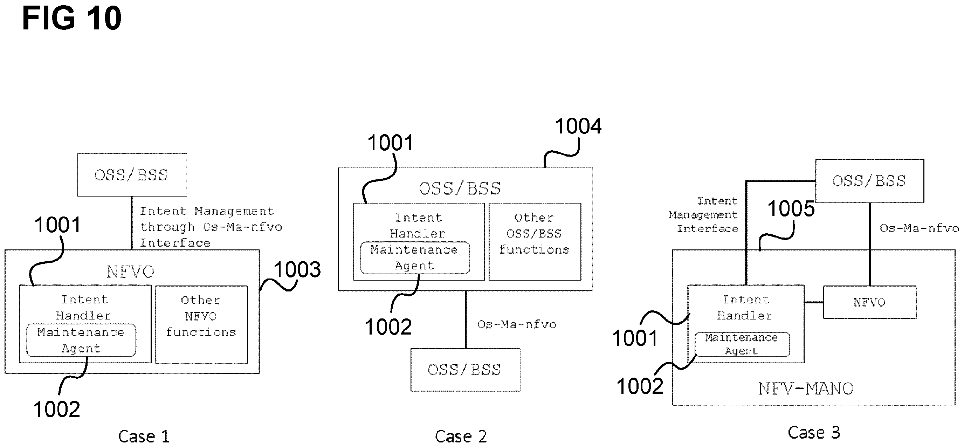

Figure 10 illustrates how an Intent Handler 1001 including a Maintenance agent 1002 may be arranged in an ETSI (European Telecommunications Standards Institute) NFV (Network Function Virtualization) architecture.

The Intent Handler 1001 may perform intent management as part of the NFVO (NFV Orchestrator) 1003, or as part of the OSSBSS (Operations Support System and Business Support System) 1004 or an NFV-MANO (Management and Orchestration) function not integrated to existing functions or Functional Blocks 1005.

The Maintenance Agent 1002 can be realized as a VNF (virtual network function)-generic OAM function or other PaaS (Platform as a Service).

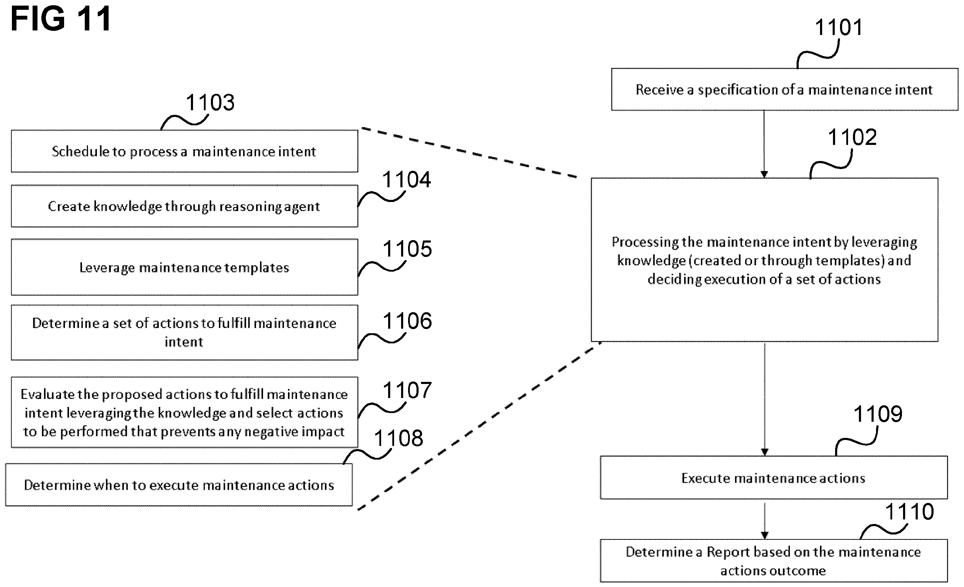

Figure 11 shows a flow diagram 1100 illustrating a method for handling a maintenance intent according to an embodiment, i.e. performed by the Intent Handler 300.

In 1101, a specification of a maintenance intent is received.

In 1102, the maintenance intent is processed by leveraging knowledge (created or through templates) and deciding about execution of a set of actions.

This processing includes one or more of the following example operations:
- Scheduling the processing of the maintenance intent in 1103
- Creating knowledge through reasoning agent in 1104
- Leveraging maintenance templates in 1105
- Determining a set of (proposed) actions to fulfill maintenance intent in 1106
- Evaluating the proposed actions to fulfill maintenance intent leveraging the knowledge and select maintenance actions (from the proposed actions) to be performed that prevents any negative impact in 1107
- Determining when to execute the proposed maintenance actions in 1108

In 1109, the selected maintenance actions are executed.

In 1110, a report based on an outcome of the execution of the maintenance actions is generated.

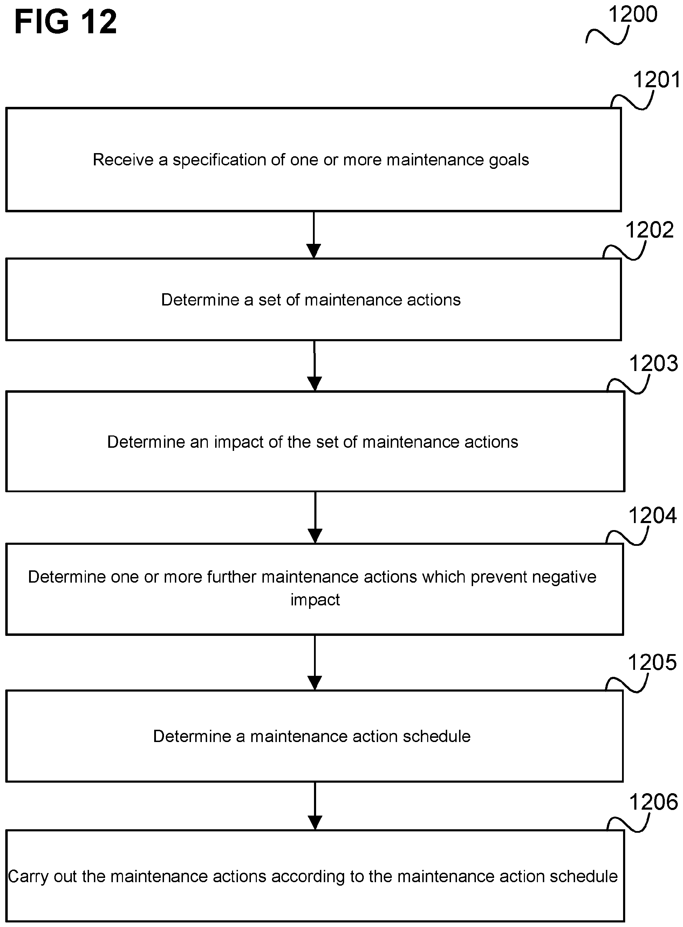

In summary, according to various embodiments, a method is provided as illustrated in figure 12.

Figure 12 shows a flow diagram 1200 illustrating a (computer-implemented) method for performing maintenance of a communication network.

In 1201, a specification of one or more maintenance goals for one or more network entities is received. The network entities (also referred to as "managed" network entities") are network components, i.e. functional units implemented each as a combination of software (e.g. agents) and hardware (e.g. various computers)) of the communication network (i.e. the one or more maintenance goals are directed (or targeted) at the one or more network entities, i.e. the one or more maintenance goals (as specified by the specification) include one or more maintenance goals for the one or more network entities (e.g. increasing performance of the one or more network entities, updating the one or more network entities, removing a failure of the one or more network entities etc.)).

In 1202, a set of maintenance actions (including one or more maintenance actions to be applied to the one or more network entities) to achieve the one or more maintenance goals is determined.

In 1203, at least one impact of the set of maintenance actions on one or more further network entities (other than the one or more network entities) if they are applied to the one or more network entities is determined.

In 1204 one or more further maintenance actions are determined (e.g. to be applied to the one or more further network entities) which prevent negative impact (i.e. a determined impact (of the determined at least one impact) which is negative) of the set of maintenance actions on the one or more further network entities.

In 1205 a maintenance action schedule of at least a subset of the maintenance actions and the determined one or more further maintenance actions is determined (i.e. a scheduling is performed).

In 1206, the maintenance actions of the subset of the maintenance actions and the determined one or more further maintenance actions are carried out according to the maintenance action schedule (i.e. instructions or commands are sent to apply the maintenance actions, i.e. trigger an update etc.).

According to various embodiment, a method for performing maintenance of a communication network is provided comprising receiving a specification of a maintenance intent and processing the maintenance intent. Based on the submitted maintenance intent the method includes:
- performing maintenance actions for one or more network entities of the communication network,
- determining a set of maintenance actions to fulfil the maintenance intent,
- determining the impact and the reasons of the impact associated with the set of maintenance actions on one or more further network entities and creating knowledge that enables prevention of negative impact,
- determining a maintenance action schedule for all or at least a subset of the maintenance actions to be performed and carrying out the maintenance actions of the subset of the maintenance actions according to the maintenance action schedule.

According to various embodiments, in other words, it is detected whether any maintenance work (i.e. one or more maintenance actions) may impact network functions, nodes or clusters (other than the one or ones targeted by the maintenance work) inadvertently during maintenance and measures are taken (specifically further maintenance actions) to avoid such an impact. For this, one or more databases and a Maintenance Reasoning agent may be provided to form a Maintenance knowledge base where consumers can subscribe to and to which they may send notifications. This allows automatizing network maintenance within a generalized intent-based framework as described in the above embodiments.

Further, according to various embodiments, maintenance tasks are validated by Maintenance execution agents (i.e. it is verified that they have been successfully carried out) based on key performance indicators. For example, an Intent Report IoC is used to inform the maintainer (i.e. the entity which has issued the intent for the maintenance) regarding the outcome of the maintenance by reporting the fulfilment of certain KPIs related to the maintenance.

According to one or more embodiments, rather than leaving the usage of AI (specifically machine learning) methods (i.e. trained machine learning models) to Intent Handler's internal decision, one or more attributes in an Intent IoC support the intent owner to specify whether to AI methods or use non-AI based solutions (i.e. e.g. rule-based solutions, or maintenance templates) for handling the intent, e.g. per expectation.

Further, according to various embodiments, (e.g. third party) templates for specific (in particular maintenance) intents may be used. For example, a repository and corresponding interfaces to register, discover, update and/or delete any rule-based templates for a specific use-case (in particular maintenance) may be provided.

According to a further embodiment, a communication network maintenance component configured to perform the method described above (in any one of its embodiments and according to any one of its examples) is provided.

The components of the communication network maintenance component may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for performing maintenance of a communication network, comprising:
Receiving a specification of one or more maintenance goals for one or more network entities of the communication network;
Determining a set of maintenance actions to achieve the one or more maintenance goals;
Determining at least one impact of the set of maintenance actions on one or more further network entities if they are applied to the one or more network entities;
Determining one or more further maintenance actions which prevent negative impact of the set of maintenance actions on the one or more further network entities;
Determining a maintenance action schedule for at least a subset of the maintenance actions and the determined one or more further maintenance actions; and
Carrying out the maintenance actions of the subset of the maintenance actions and the determined one or more further maintenance actions according to the maintenance action schedule.

2. The method of claim 1, comprising determining the maintenance action schedule of the maintenance actions of the subset of the maintenance actions and the determined one or more further maintenance actions in a manner that, according to the maintenance action schedule, a further maintenance action determined to prevent a negative impact of a maintenance action of the subset of maintenance actions is carried out before the maintenance action of the subset of maintenance actions.

3. The method of claim 1 and 2, wherein the subset of candidate maintenance actions comprises one or more candidate maintenance actions of the set of candidate maintenance actions which do not have a negative impact on one or more further network entities or whose negative impact on the one or more further network entities is prevented by the one or more further maintenance actions.

4. The method of any one of claims 1 to 3, comprising determining the at least one impact based on dependencies between the one or more network entities and the one or more further network entities.

5. The method of any one of claims 1 to 4, comprising monitoring the behaviour of the one or more network entities (i.e. specifically the interaction (i.e. communication) with other network entities) and determining the at least one impact on the one or more other network entities from observations gained by monitoring the behaviour of the one or more network entities.

6. The method of any one of claims 1 to 5, wherein the specification of the one or more maintenance goals includes requirements and/or constraints.

7. The method of any one of claims 1 to 6, wherein the maintenance actions of the set of maintenance actions and/or the one or more further maintenance actions are or include an update of software of a respective network entity, an update of firmware of a respective network entity setting a configuration of a respective network entity, setting a policy for a respective network entity, checking hardware of a respective network entity and/or replacing or switching hardware of a respective network entity.

8. The method of any one of claims 1 to 7, wherein the specification of the one or more maintenance goals specifies the one or more maintenance goals by referring to a maintenance template of a predefined set of maintenance templates.

9. The method of any one of claims 1 to 8, comprising determining the at least one impact of the set of maintenance actions on one or more further network entities by predicting the at least one impact by means of a machine learning model.

10. The method of any one of claims 1 to 8, wherein the specification specifies whether the one or more maintenance goals may or whether the one or more maintenance goals should be achieved using machine learning methods and wherein the method comprises determining the set of maintenance actions, the at least one impact, the one or more further maintenance actions and/or the maintenance action schedule by means of one or more machine learning methods only if the specification specifies that the one or more maintenance goals may be achieved using machine learning methods.

11. The method of claim 9, wherein the method comprises determining the set of maintenance actions, the at least one impact, the one or more further maintenance actions and/or the maintenance action schedule by means of one or more machine learning methods in reaction to the specification specifying that the one or more maintenance goals should be achieved using machine learning methods.

12. The method of any one of claims 1 to 11, further comprising verifying whether the one or more maintenance goals (e.g. KPI expectations) have been fulfilled and reporting to a sender of the specification of the one or more maintenance goals about whether the one or more maintenance goals has been fulfilled.

13. A communication network maintenance component, configured to perform the method of any one of claims 1 to 12.
